(19) Europäisches Patentamt
European Patent Office
Office européen des brevets

(11) EP 0 709 403 A1

# (12) EUROPEAN PATENT APPLICATION

(43) Date of publication:
**01.05.1996 Bulletin 1996/18**

(51) Int. Cl.$^6$: **C08F 8/42**

(21) Application number: **95116968.9**

(22) Date of filing: **27.10.1995**

(84) Designated Contracting States:
**DE**

(30) Priority: **28.10.1994 JP 287241/94**
**02.11.1994 JP 291935/94**

(71) Applicant: **KANEGAFUCHI KAGAKU KOGYO KABUSHIKI KAISHA**
**Kıta-ku Osaka-shi Osaka 530 (JP)**

(72) Inventors:
- **Sakaguchi, Masashi**
  **Kakogawa-shi, Hyogo (JP)**
- **Chiba, Makoto**
  **Kobe-shi, Hyogo (JP)**

(74) Representative: **VOSSIUS & PARTNER**
**Siebertstrasse 4**
**D-81675 München (DE)**

## (54) Curable composition for injection molding

(57) A curable compoisiton for injection molding which comprises, as essential ingredients, (A) a saturated hydrocarbon polymer containing at least one alkenyl group capable of undergoing a hydrosilylation reaction per molecule, (B) a hardener having a molecular weight of 30,000 or lower and containing at least two hydrosilyl groups per molecule, and (C) a hydrosilylation catalyst.

EP 0 709 403 A1

## Description

The present invention relates to a curable liquid composition from which a molded product of a rubbery substance is obtained with an injection-molding machine. More particularly, this invention relates to a curable composition for injection molding which can be used for various products such as rubber rolls, e.g., fixing rolls for copiers, caps, medical instruments, rubber plugs, heat-resistant caps, and gaskets including packings and O-rings.

Injection molding has spread extensively for long due to its high production efficiency, and holds one of the most principal positions among resin-molding processes. The injection-molding process is applicable to a wide range of resins, which are roughly divided into thermoplastic resins and thermosetting resins. On the other hand, the rubbery substances, in particular thermoset rubbery substances having excellent heat resistance, which can be produced through injection molding are limited in kind. Representative examples thereof include silicones and urethanes. The injection-molding process for producing such thermoset substances is distinguished from ordinary injection molding, and is especially referred to as reaction injection molding (RIM). Molded forms produced by RIM are used in a variety of fields.

Various curable liquid compositions which cure to yield rubbery substances have been developed. For example, the curable composition disclosed in JP-A-3-95266 (the term "JP-A" as used herein means an "unexamined published Japanese patent application"), which is cured by a hydrosilylation reaction, is known as a quick-curing composition excellent in deep-part curability.

On the other hand, rubber materials for injection molding have various applications as mentioned above, i.e., rubber rolls, e.g., fixing rolls for copiers, caps, medical instruments, rubber plugs, heat-resistant caps, and gaskets including packings and O-rings. According to these applications, injection-molding materials are required to have various properties including (1) weatherability, (2) heat resistance, (3) long-term stability, (4) chemical resistance, (5) water absorption resistance, (6) low permeability to gases and water vapor, (7) vibration-deadening properties, and (8) insulating properties. However, none of the conventional injection-molding materials combine all of these properties. Further, there has been no material designed to have (9) stability in one-pack state, in addition to the above-enumerated properties.

For example, the silicone resins already known as a curable liquid composition for injection molding, which cure to yield a rubbery substance, are deficient in property (5) or (6), although they satisfy properties (1), (2), (3), (4), and (8), and in some cases property (9).

The urethane resins, although advantageous in that a wide range of property regulation is possible by changing the structure of the main chain thereof, are insufficient in properties (1), (2), and (4) due to the presence of urethane bonds therein.

Furthermore, the material disclosed in Japanese Patent Application No. 05-047826, which comprises a polyoxypropylene polymer as the main chain thereof, is deficient in properties (1), (5), and (6) due to the presence of ether bonds in the main chain.

The object of the present invention is to obtain an injection-molding composition which comprises a so-called liquid rubber and combines properties (1) to (9) as well as excellent processability and excellent mechanical properties.

This object has been achieved by the surprising finding that an injection-molding curable composition which has excellent processability, satisfies properties (1) to (9) enumerated above, and is usable in a wide range of applications can be obtained by applying a saturated hydrocarbon polymer obtained mainly from isobutylene to an addition reaction type curing system. The present invention has been completed base on this finding.

That is, the present invention relates to a curable composition for injection molding which comprises as essential components:

(A) a saturated hydrocarbon polymer which contains at least one alkenyl group capable of undergoing a hydrosilylation reaction per molecule and has a molecular weight of 100,000 or lower;
(B) a hardener having a molecular weight of 30,000 or lower and containing at least two hydrosilyl groups per molecule; and
(C) a hydrosilylation catalyst. The present invention also relates to a curable composition for injection molding which comprises, besides components (A) to (C) described above, an inorganic filler for further improving mechanical properties as essential component (D), a storage stability improver for imparting suitability for one-package formulation as essential component (E), and a plasticizer for flowability regulation as essential component (F).

Component (A) used in the present invention is a saturated hydrocarbon polymer which contains at least one alkenyl group capable of undergoing a hydrosilylation reaction per molecule and which has a molecular weight of 100,000 or lower. The term "saturated hydrocarbon polymer" used herein means a polymer which contains substantially no unsaturated carbon-carbon bond in the molecule excluding aromatic rings, and in which the main chain excluding the alkenyl group is made up of saturated hydrocarbon units. The alkenyl group capable of undergoing a hydrosilylation reaction is not particularly limited, as long as it is a group containing a carbon-carbon double bond active in a hydrosilylation reaction. Examples of the alkenyl group include aliphatic unsaturated hydrocarbon groups having 2 to 6 C atoms such as vinyl, allyl, methylvinyl, propenyl, butenyl, pentenyl, and hexenyl and cyclic unsaturated hydrocarbon groups such as cyclopropenyl, cyclobutenyl, cyclopentenyl, and cyclohexenyl. In this invention, component (A) desirably has from 1 to 10 alkenyl groups per molecule.

The polymer constituting the backbone of the saturated hydrocarbon polymer of component (A) may be obtained, for example, by

(1) polymerizing a monomer consisting mainly of an olefin compound having 2 to 6 carbon atoms, such as, e.g., ethylene, propylene, 1-butene, or isobutylene, or

(2) homopolymerizing a diene compound such as, e.g., butadiene or isoprene, or copolymerizing a diene compound and an olefin compound such as those enumerated above, followed by hydrogenation. However, an isobutylene polymer, a hydrogenated polybutadiene polymer, or a hydrogenated polyisoprene polymer is desirable from the standpoints of easiness of the incorporation of a functional group into a terminal and easiness of molecular-weight regulation and from the standpoint that an increased number of terminal functional groups can be incorporated.

The isobutylene polymer may be made up of isobutylene units only, or may contain units derived from a monomer copolymerizable with isobutylene, in an amount of desirably 50% (wt%; the same applies hereinafter) or smaller, preferably 20% or smaller, especially preferably 10% or smaller.

Examples of such copolymerizable monomers include olefins having 4 to 12 carbon atoms, vinyl ethers, aromatic vinyl compounds, vinylsilanes, and allylsilanes. Specific examples of such comonomers include 1-butene, 2-butene, 2-methyl-1-butene, 3-methyl-1-butene, pentene, 4-methyl-1-pentene, hexene, vinylcyclohexane, methyl vinyl ether, ethyl vinyl ether, isobutyl vinyl ether, styrene, α-methylstyrene, dimethylstyrene, p-t-butoxystyrene, p-hexenyloxystyrene, p-allyloxystyrene, p-hydroxystyrene, β-pinene, indene, vinyldimethylmethoxysilane, vinyltrimethylsilane, divinyldimethoxysilane, divinyldimethylsilane, 1,3-divinyl-1,1,3,3-tetramethyldisiloxane, trivinylmethylsilane, tetravinylsilane, allyldimethylmethoxysilane, allyltrimethylsilane, diallyldimethoxysilane, diallyldimethylsilane, γ-methacryloyloxypropyltrimethoxysilane and γ-methacryloyloxypropylmethyldimethoxysilane.

Like the isobutylene polymer described above, the hydrogenated polybutadiene polymer and other saturated hydrocarbon polymers may contain monomer units other than the main monomer units.

The saturated hydrocarbon polymer for use as component (A) in the present invention may contain a small proportion, preferably up to 10%, of units derived from a monomer which retains a double bond after polymerization, such as a polyene compound, e.g., butadiene, isoprene, 1,13-tetradecadiene, 1,9-decadiene or 1,5-hexadiene, as long as the object of the invention is accomplished.

The saturated hydrocarbon polymer, which is preferably an isobutylene polymer, a hydrogenated polyisoprene polymer or a hydrogenated polybutadiene polymer, has preferably a number-average molecular weight (GPC method; calculated for standard polystyrene) of about 500 to 100,000. An especially preferred range of the number-average molecular weight thereof is about from 1,000 to 40,000, because the polymer having such a molecular weight is a satisfactorily flowable liquid from the standpoint of handleability.

For incorporating an alkenyl group into the saturated hydrocarbon polymer of component (A), various proposed processes are usable, which are roughly divided into processes for incorporating an alkenyl group after polymerization and processes for incorporating an alkenyl group during polymerization.

In the case where one process for incorporating an alkenyl group after polymerization is applied to a polymer having a hydroxyl group at the terminal, or in the main or side chain, the hydroxyl group is converted to -ONa, -OK or the like, before the polymer is reacted with an organohalogen compound represented by formula (1):

$$CH_2=CH-R^1-Y \qquad (1)$$

[wherein Y is a halogen atom, e.g., chlorine or iodine; and $R^1$ is a divalent organic group represented by $-R^2-$, $-R^2-OC(=O)-$ or $-R^2-C(=O)-$ (wherein $R^2$ is a divalent hydrocarbon group having 1 to 20 carbon atoms, preferred examples of which include an alkylene group, a cycloalkylene group, an arylene group, and an aralkylene group), especially preferably a divalent group selected from $-CH_2-$ and

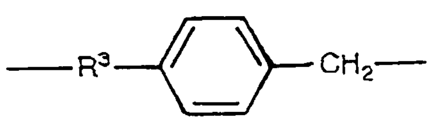

(wherein $R^3$ is a hydrocarbon group having 1 to 10 carbon atoms)] to thereby produce a saturated hydrocarbon polymer having a terminal alkenyl group.

Examples of methods for converting the terminal hydroxyl group of the hydroxy-terminated saturated hydrocarbon polymer into an oxymetal group include methods of reacting the polymer with an alkali metal such as Na or K, a metal hydride such as NaH, a metal alkoxide such as $NaOCH_3$, or a caustic alkali such as caustic soda or caustic potash.

The alkenyl-terminated saturated hydrocarbon polymer obtained by the above-described process has almost the same molecular weight as the hydroxy-terminated saturated hydrocarbon polymer used as a starting material. In the case where a higher molecular weight is desired, a process may be used in which the hydrocarbon polymer is reacted with a polyvalent organohalogen compound containing two or more halogen atoms per molecule, such as, e.g., methylene chloride, bis(chloromethyl)benzene or bis(chloromethyl) ether, before the resulting polymer having an increased molecular weight is reacted with the organohalogen compound represented by formula (1). Thus, a saturated hydrocarbon polymer having a higher molecular weight and containing a terminal alkenyl group can be obtained.

Examples of the organohalogen compound represented by formula (1) include allyl chloride, allyl bromide, vinyl(chloromethyl)benzene, allyl(chloromethyl)benzene, allyl(bromomethyl)benzene, allyl chloromethyl ether, allyl(chloromethoxy)benzene, 1-hexenyl(chloromethoxy)benzene, and allyloxy(chloromethyl)benzene. However, the compound represented by formula (1) should not be construed as being limited thereto. Of these organohalogen compounds, allyl chloride is preferred because it is inexpensive and reacts readily.

There also is a process for incorporating an alkenyl group into a halogenated polymer, such as an isobutylene polymer having a group containing a Cl atom bonded through a covalent bond. Examples of this process are described in, e.g., JP-A-63-105005 and JP-A-4-154815. Specifically, examples thereof include a process in which various alkenyl phenyl ethers are used to conduct a Friedel-Crafts reaction; a process in which the halogenated polymer is reacted with an allyltrimethylsilane or the like in the presence of a Lewis acid to displace the Cl atoms with allyl groups; and a process in which various phenols are used to conduct a Friedel-Crafts reaction to incorporate hydroxyl groups into the polymer, and alkenyl groups are then incorporated thereinto by the alkenyl-incorporating process described above.

Examples of the processes for incorporating an alkenyl group during polymerization include a process in which cationically polymerizable monomers containing isobutylene are cationically polymerized using, as an initiator serving also as a chain transfer agent (initiator-chain transfer agent), a compound which has a halogen atom bonded to a carbon atom bonded to a carbon atom as a member of an aromatic ring and/or a compound which has a halogen atom bonded to a tertiary carbon atom and further using a Lewis acid as a catalyst in the presence of allyltrimethylsilane to thereby produce an allyl-terminated isobutylene polymer. Examples thereof further include a process for producing an isobutylene polymer containing an alkenyl group at the terminal of the main chain or side chain which comprises adding either an unconjugated diene such as 1,9-decadiene or an alkenyloxystyrene such as p-hexenyloxystyrene to the polymerization system (see JP-A-4-288309).

The Lewis acid used as a cationic-polymerization catalyst may be a compound represented by $MX'_n$ (wherein M is a metal atom and X' is a halogen atom), and examples thereof include $BCl_3$, $Et_2AlCl$, $EtAlCl_2$, $AlCl_3$, $SnCl_4$, $TiCl_4$, $VCl_5$, $FeCl_3$ and $BF_3$. However, the cationic-polymerization catalyst is not limited thereto. Of these Lewis acids, $BCl_3$, $SnCl_4$ and $BF_3$ are desirable, and $TiCl_4$ is preferred. The Lewis acid is preferably used in an amount of from 0.1 to 10 mol, more preferably from 2 to 5 mol, per mol of the initiator-chain transfer agent.

The hardener having a molecular weight of 30,000 or lower, which is used as component (B) in the present invention, is not particularly limited, so long as it is a compound containing at least two hydrosilyl groups per molecule. The term "one hydrosilyl group" used herein means one SiH group. Therefore, when two hydrogen atoms are bonded to the same Si, it is calculated as two hydrosilyl groups.

As component (B), an organohydrogenpolysiloxane may be preferably used. The term "organohydrogenpolysiloxane" used herein means a polysiloxane having a hydrocarbon group or a hydrogen atom on the Si atom and the examples thereof include linear and cyclic organohydrogenpolysiloxanes having the following structures.

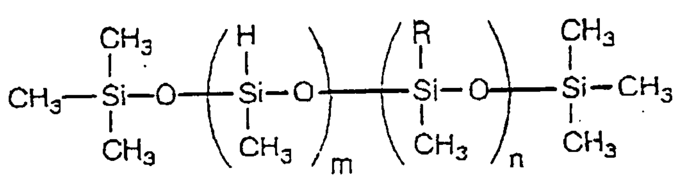

(m and n each is an integer satisfying $10 \leq (m+n) \leq 50$, $2 \leq m$, and $0 \leq n$; and R is a $C_2$-$C_{20}$ hydrocarbon group which may contain one or more phenyl groups.)

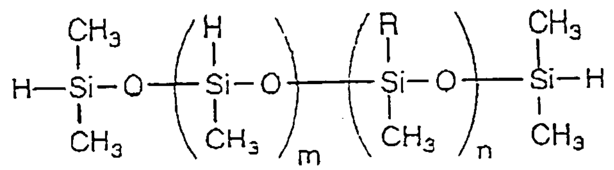

(m and n each is an integer satisfying $10 \leq (m+n) \leq 50$, $0 \leq m$, and $0 \leq n$; and R is a $C_2$-$C_{20}$ hydrocarbon group which may contain one or more phenyl groups.)

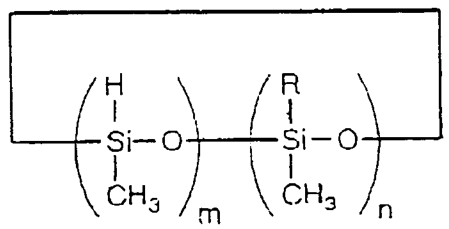

(m and n each is an integer satisfying $2 \leq (m+n) \leq 20$, $2 \leq m \leq 20$, and $0 \leq n \leq 18$; and R is a $C_2$-$C_{20}$ hydrocarbon group which may contain one or more phenyl groups.)

As component (B), an organic hardener containing at least two organohydrogenpolysiloxane residues per molecule may be also preferably used. The term "organohydrogenpolysiloxane" used herein means a polysiloxane having a hydrocarbon group or a hydrogen atom on the Si atom. The preferred examples thereof are organic hardeners represented by formula (2):

$$R^4X_a \qquad (2)$$

(wherein X is an organohydrogenpolysiloxane residue containing at least one hydrosilyl group; $R^4$ is a mono- to tetravalent hydrocarbon group having 2 to 2,000 carbon atoms; and a is an integer of 2 to 4) and having a molecular weight of 30,000 or lower.

In formula (2), X represents an organohydrogenpolysiloxane residue containing at least one hydrosilyl group. Specific examples thereof include linear and cyclic organohydrogenpolysiloxanes having the following structures.

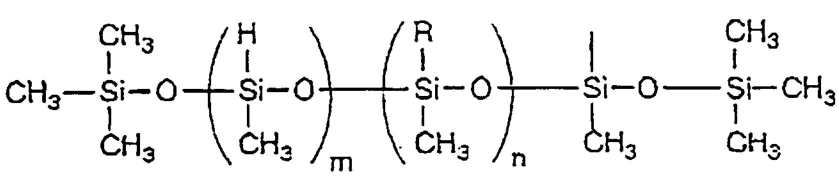

(m and n each is an integer satisfying 1≤(m+n)≤50, 1≤m, and 0≤n; and R is a $C_2$-$C_{20}$ hydrocarbon group which may contain one or more phenyl groups.)

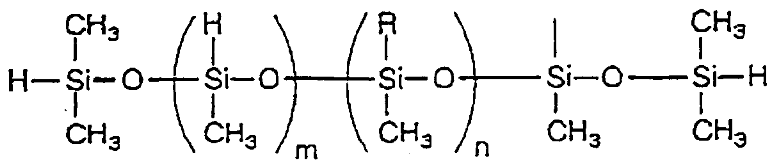

(m and n each is an integer satisfying 0≤(m+n)≤50, 0≤m, and 0≤n; and R is a $C_2$-$C_{20}$ hydrocarbon group which may contain one or more phenyl groups.)

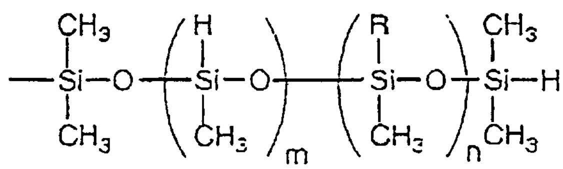

(m and n each is an integer satisfying 0≤(m+n)≤50, 0≤m, and 0≤n; and R is a $C_2$-$C_{20}$ hydrocarbon group which may contain one or more phenyl groups.)

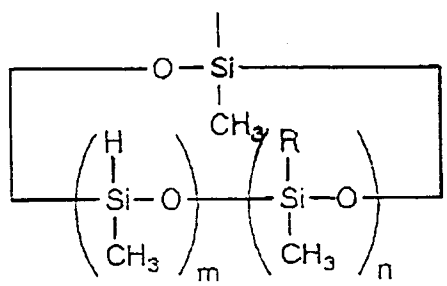

(m and n each is an integer satisfying 1≤(m+n)≤19, 1≤m≤19, and 0≤n≤18; and R is a $C_2$-$C_{20}$ hydrocarbon group which may contain one or more phenyl groups.)

Of the various hydrosilyl groups enumerated above, the following hydrosilyl groups are especially preferred from the standpoint that they are less apt to impair the compatibility of the hydrosilyl-containing hardener as component (B) in this invention, with various organic polymers as component (A).

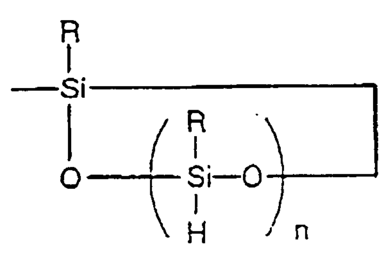

[R=$CH_3$、$C_2H_5$、$C_6H_5$ n=1~6]

In formula (2), $R^4$ is not particularly limited, so long as it is a mono- to tetravalent hydrocarbon group having 2 to 2,000 carbon atoms. However, a saturated hydrocarbon group is especially preferred from the standpoint of the compatibity with various organic polymers and the reactivity of the hydrosilyl groups

Further, a non-polymeric organic hardener containing at least two hydrosilyl groups per molecule except for the organohydrogenpolysiloxane residue may be preferably used as component (B). Preferred examples thereof are organic hardeners represented by formula (3):

$$R^5Xb$$

(wherein X is a group containing at least one hydrosilyl group except for an organohydrogenpolysiloxane residue; $R^5$ is a mono- to tetravalent hydrocarbon group having 2 to 2,000 carbon atoms; and b is an integer of 2 to 4 when X is a group containing one hydrosilyl group or an integer of 1 to 4 when X is a group containing at least two hydrosilyl group).

In formula (3), specific examples of X include groups each containing only one silicon atom, such as

$-Si(H)_n(CH_3)_{3-n}$ (n = 1 to 3),
$-Si(H)_n(C_2H_5)_{3-n}$ (n = 1 to 3),
$-Si(H)_n(C_6H_5)_{3-n}$ (n = 1 to 3) and
$-SiH_2(C_6H_{13})$,

and groups each containing two or more silicon atoms, such as

$—Si(CH_3)_2Si(CH_3)_2H$ , $—Si(CH_3)_2CH_2CH_2Si(CH_3)_2H$ ,
$—Si(CH_3)_2Si(CH_3)H_2$ ,

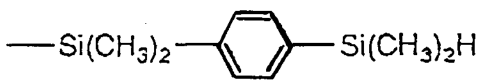 ,

$—Si(CH_3)_2NHSi(CH_3)_2H$ , $—Si(CH_3)_2N[Si(CH_3)_2H]_2$ ,

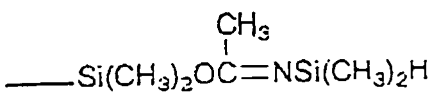 and 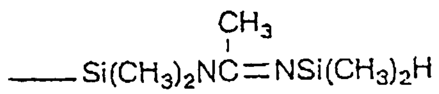 .

In formula (3), $R^5$ is not particularly limited, so long as it is a mono- to tetravalent hydrocarbon group having 2 to 2,000 carbon atoms. However, a saturated hydrocarbon group is especially preferred from the standpoint of the compatibity with various organic polymers and the reactivity of the hydrosilyl groups.

The number of hydrosilyl groups contained in formulae (2) and (3) is at least 2, preferably from 2 to 15, more preferably from 3 to 12, per molecule. If the number of the hydrosilyl groups per molecule is less than 2, the curing of the composition of this invention by a hydrosilylation reaction proceeds too slowly, frequently resulting in an undercured molding. If the number of the hydrosilyl groups exceeds 15, not only the hardener of component (B) has poor stability, but also a large amount of hydrosilyl groups remain in the cured molding to cause voids or cracks.

Processes for producing the hydrosilyl-containing hydrocarbon hardener for use as component (B) in the present invention are not particularly limited, and any desired process may be used. Examples thereof include (i) a process in which a hydrocarbon compound having an Si-Cl group within the molecule is treated with a reducing agent, e.g., $LiAlH_4$ or $NaBH_4$, to reduce the Si-Cl group in the compound into an Si-H group; (ii) a process in which a hydrocarbon compound having a functional group X in the molecule is reacted with a compound simultaneously having both of a functional group Y reactive with the functional group X and a hydrosilyl group in the molecule; and (iii) a process in which an alkenyl-containing hydrocarbon compound is subjected to selective hydrosilylation with a polyhydrosilane compound containing at least two hydrosilyl groups to thereby enable a hydrosilyl group to remain in the molecule of the hydrocarbon compound after the reaction.

Of the processes enumerated above, process (iii) is preferred in that the production steps are generally simple. In this process, there are cases where in the reaction of the hydrocarbon compound with some polyhydrosilane compounds, two or more hydrosilyl groups of the polyhydrosilane react with alkenyl groups of the hydrocarbon compound to result in an increased molecular weight. However, such a hydrosilyl-containing hydrocarbon compound may be used as component (B), which use does not cause any problem.

The thus-produced components (A) and (B) are used in such a proportion that the molar ratio of hydrosilyl groups to alkenyl groups is preferably from 0.2 to 5.0, more preferably from 0.4 to 2.5. If the molar ratio thereof is lower than 0.2, the curing of the composition of this invention only gives undercured moldings which are tacky and have insufficient strength. If the molar ratio thereof is higher than 5.0, the curing of the composition gives a cured molding containing residual active hydrosilyl groups in a large amount, so that cracks or voids tend to generate and a cured molding which is homogeneous and has sufficient strength is less apt to be obtained.

The hydrosilylation catalyst used as component (C) in the present invention is not particularly limited, and any desired hydrosilylation catalyst may be used.

Examples of the hydrosilylation catalyst include chloroplatinic acid, elemental platinum, a catalyst comprising solid platinum supported on a carrier, e.g., alumina, silica or carbon black, platinum-vinylsiloxane complexes {e.g., $Pt_n(ViMe_2SiOSiMe_2Vi)_n$ and $Pt[(MeViSiO)_4]_m$}, platinum-phosphine complexes {e.g., $Pt(PPh_3)_4$ and $Pt(PBu_3)_4$}, platinum-phosphite complexes {e.g., $Pt[P(OPh)_3]_4$ and $Pt[P(OBu)_3]_4$} (in the above formulae, Me is methyl, Bu is butyl, Vi is vinyl, Ph is phenyl, and n and m each is an integer), $Pt(acac)_2$, the platinum-hydrocarbon complexes described in U.S. Patents 3,159,601 and 3,159,662 to Ashby, and the platinum alcoholate catalyst described in U.S. Patent 3,220,972 to Lamoreaux.

Examples of the catalyst other than platinum compounds include $RhCl(PPh_3)_3$, $RhCl_3$, $Rh/Al_2O_3$, $RuCl_3$, $IrCl_3$, $FeCl_3$, $AlCl_3$, $PdCl_2 \cdot 2H_2O$, $NiCl_2$, and $TiCl_4$. These catalysts may be used either alone or in combination of two or more thereof. From the standpoint of catalytic activity, chloroplatinic acid, platinum-olefin complexes, platinum-vinylsiloxane complexes and $Pt(acac)_2$ are preferred. Although the amount of the catalyst is not particularly limited, it is desirable to use the catalyst in an amount of from $10^{-1}$ to $10^{-8}$ mol, preferably from $10^{-2}$ to $10^{-6}$ mol, per mol of the alkenyl groups contained in component (A). Amounts thereof larger than $10^{-1}$ mol are undesirable in that hydrosilylation catalysts are generally expensive and corrosive and may generate hydrogen gas in a large quantity to cause foaming in the cured molding.

Since the curable composition of the present invention is cured by the addition reaction of Si-H groups to alkenyl groups which reaction is catalyzed by a noble-metal catalyst, the curing rate is exceedingly high and the composition is suitable for use in line production.

The fine silica powder which may be used as component (D) in the present invention may be hydrous silica obtained by, e.g., a wet process comprising the hydrolysis of sodium silicate, or anhydrous silica obtained by, e.g., a dry process comprising the pyrolysis of either a silicon halide, e.g., silicon tetrachloride, or an organosilicon compound. Examples of the hydrous silica include Nipsil VN3, Nipsil AQ, Nipsil LP, Nipsil ER, Nipsil NS, Nipsil NS-T, Nipsil NA, Nipsil L300, Nipsil N300A and Nipsil E, manufactured by Nippon Silica Industrial Co., Ltd., Japan; Santocel FRC and Santocel CS, manufactured by Monsanto Co.; Hi-Sil 233 and Hi-Sil X-303, manufactured by PPG Industries, Inc.; and Quso F-20, manufactured by Philadelphia Quarts Inc. Examples of the anhydrous silica include Aerosil 130, Aerosil 200, Aerosil 200V, Aerosil 200CF, Aerosil 300CF, Aerosil 380, Aerosil OX50, Aerosil TT600, Aerosil MOX80, Aerosil MOX170, Aerosil COK84, Aerosil R972, Aerosil R974, Aerosil R202, Aerosil R805 and Aerosil R812, manufactured by Nippon Aerosil Co., Ltd., Japan; and Cab-O-Sil MS-5, Cab-O-Sil MS-7, Cab-O-Sil HS-5 and Cab-O-Sil HS-7, manufactured by Cabot Corp. Of these silicas, anhydrous silicas are preferred because inclusion of a large amount of water into the composition results in the possibility of side reactions during the curing reaction. Particuraly preferred are anhydrous silicas that surfaces have been hydrophobized (e.g., Aerosil R972, Aerosil R974, Aerosil R202, Aerosil R805 and Aerosil R812).

The calcium carbonate which may be used as component (D) in the present invention may be natural chalk, pulverized limestone or marble, or any of various calcium carbonate products obtained by the chemical precipitation process. Also usable are modified calcium carbonates obtained by treating the surfaces of these calcium carbonates with a fatty acid, resin acid, fatty acid ester, titanate, etc. Examples of the calcium carbonate produced by the mechanical pulverization of limestone and its classification, which is called heavy calcium carbonate, include Whiton SB, Whiton B, Softon 3200 and Softon 2200, manufactured by Shiraishi Calcium Kaisha, Ltd., Japan; and Super SSS, Super #2000 and Nanox #30, manufactured by Maruo Calcium Co., Ltd., Japan. Examples of the heavy calcium carbonate surface-treated with a fatty acid include PO320B and PO220B, manufactured by Shiraishi Calcium Kaisha, Ltd.; and Snowlite SS, Snowlite SSS, M-400, M300 and M150, manufactured by Maruo Calcium Co., Ltd. On the other hand, examples of the calcium carbonate obtained by the chemical precipitation process, which is called colloidal calcium carbonate, include Viscolite R, Viscolite SV, EDS-D10A, EDS-D10B, EDS-D10D, EDS-D10E, Hakuenka CC, Hakuenka CCR, Hakuenka O, Hakuenka DD and Calmos, manufactured by Shiraishi Kogyo Kaisha, Ltd., Japan; and Kalfain 200M, Kalfain 100 and MSK-PO, manufactured by Maruo Calcium Co., Ltd. The calcium carbonate for use as component (D) should not be construed as being limited thereto. In the case where a higher mechanical strength is desired while maintaining the same workability (viscosity), heavy calcium carbonates are preferred to the other calcium carbonates.

The talc which may be used as component (D) in the present invention may be one produced by pulverizing a talc ore and classifying the particles; the properties of talc vary depending on the locality of the ore. Also usable are modified talcs obtained by treating the surfaces of such talc powders with a titanate, aminosilane, epoxysilane, etc. Specific examples of the talc include LMR, LMR #200 and SP #50, manufactured by Maruo Calcium Co., Ltd.; and MS, Micro Ace L-1 and Micro Ace P-3, manufactured by Nippon Talc Co., Ltd., Japan. However, the talc for use as component (D) should not be construed as being limited to these examples.

The carbon black which may be used as component (D) in the present invention may be any of various kinds of carbon blacks which are divided according to production processes. Examples thereof include channel black, furnace black, acetylene black, and thermal black.

Component (D) is preferably used in the following amount from the standpoint that the addition thereof does not impair the properties derived from component (A), such as high weatherability, high heat resistance and low permeability to gases and water vapor. For example, the preferred amount of fine silica powder is 50 parts by weight or less per 100

parts by weight of component (A), the preferred amount of calcium carbonate is 400 parts by weight or less per 100 parts by weight of component (A), the preferred amount of talc is 400 parts by weight or less per 100 parts by weight of component (A), and the preferred amount of carbon black is 50 parts by weight or less per 100 parts by weight of component (A).

Before the composition of the present invention is subjected to molding with an injection-molding machine, the composition should be regulated to have a viscosity of from 200 to 20,000 poise at a shear rate of 1,000 $sec^{-1}$. In the case where the plasticizer of component (F) is not used, the addition amount of component (D) should be necessarily within a certain range which is determined by the viscosity of component (A). On the other hand, in the case of using the plasticizer of component (F), the addition amount of component (D) is not particularly limited, but it is necessary to regulate the addition amounts of components (D) and (F) from the standpoint of mechanical and other properties of the cured molding.

Since the injection-molding curable composition of the present invention is cured by a hydrosilylation reaction, component (D) should be a filler which does not inhibit this hydrosilylation reaction.

The storage stability improver used as component (E) in the present invention is added in order to improve the storage stability of the composition. An ordinary stabilizer known as a storage stabilizer for component (B) may be used as component (E) without particular limitation, as long as the stabilizer used performs its function. Preferred examples of the stabilizer include compounds containing an aliphatic unsaturated bond, organophosphorus compounds, organosulfur compounds, nitrogen compounds, tin compounds and organic peroxides. Specific examples thereof include 2-benzothiazolyl sulfide, benzothiazole, thiazole, dimethyl acetylenedicarboxylate, diethyl acetylenedicarboxylate, BHT, butylhydroxyanisole, vitamin E, 3-methyl-1-buten-3-ol, organosiloxanes containing an acetylenically unsaturated group, acetylene alcohol, 3-methyl-1-butyl-3-ol, diallyl fumarate, diallyl maleate, diethyl fumarate, diethyl maleate, dimethyl maleate, 2-pentenenitrile and 2,3-dichloropropene. Particulaly preferred are thiazole and benzothiazole from the standpoint of attaining both pot life and quick curability. The storage stability improver should not be construed as being limited to these examples. The storage stability improver is preferably used in an amount of from $10^{-6}$ to $10^{-1}$ mol per mol of component (A) and the Si-H group-containing compound of component (B). This is because stability improver amounts smaller than $10^{-6}$ mol result in insufficient improvement of the storage stability of component (B), while amounts thereof exceeding $10^{-1}$ mol may result in curing inhibition. Storage stability improvers may be used either alone or as a mixture of two or more thereof.

The plasticizer used as component (F) in the present invention is added in order to improve the flowability of the composition. Although ordinarily used plasticizers may be used, plasticizers having good compatibility with the saturated hydrocarbon polymer for use in this invention are preferred. Examples of the plasticizer include polybutene, hydrogenated polybutene, $\alpha$-methylstyrene oligomer, liquid polybutadiene, hydrogenated liquid polybutadiene, paraffin oil, naphthene oil and atactic polypropylene. Of these plasticizers, hydrocarbon compounds containing no unsaturated bond, such as hydrogenated polybutene, hydrogenated liquid polybutadiene, paraffin oil, naphthene oil and atactic polypropylene, are preferred.

If necessary, ingredients such as, e.g., another type of filler, an antioxidant, an ultraviolet absorber, a pigment and a surfactant may be suitably added to the curable composition of the present invention. Examples of this optional filler include titanium oxide, zinc white and barium sulfate.

The composition of the present invention not only has excellent deep-part curability because of the addition-type curing system thereof which is cured by a hydrosilylation reaction, but also has various properties including (1) high weatherability, (2) high heat resistance, (3) long-term stability, (4) chemical resistance, (5) low water absorption, (6) low permeability to gases and water vapor, (7) vibration-deadening properties, and (8) insulating properties due to the use of the saturated hydrocarbon polymer. Moreover, when a storage stability improver is used, the composition also has (9) stability in one-pack state. Thus, the injection-molding material provided by the present invention is exceedingly superior.

For example, a molding obtained from the composition of the present invention is excellent in some of the above-enumerated various properties as follows. With respect to low permeability to water vapor, the molding has a vapor permeability as low as about $1 \times 10^{-11}$ g · $cm/cm^2$ · sec · cmHg. With respect to heat resistance, the molding never undergoes surface melting even under severe conditions of 130°C and 300 days. With respect to insulating properties, the molding has a permittivity as low as about 2.44.

The present invention will be explained below in more detail by reference to Examples, but the invention should not be construed as being limited thereto in any way.

PRODUCTION EXAMPLE 1

To a 1-L autoclave made of a pressure-resistant glass were attached a stirrer, a three-way cock, and a vacuum line. The polymerization vessel was dried by heating the same at 100°C for 1 hour with evacuation through the vacuum line. After cooling to room temperature, the three-way cock was operated to restore the vessel to ordinary pressure with nitrogen.

Thereafter, 155 mL of methylene chloride and 348 mL of n-hexane which both had been dried with a molecular sieve were introduced as a solvent into the autoclave with a syringe while nitrogen was kept flowing through one way of the three-way cock. Thereto was then added 10 mL of a methylene chloride solution of 7.5 mmol of DCC (compound A specified below), followed by 3.0 mmol of α-picoline as an additive.

A liquefied-gas thief tube made of a pressure-resistant glass, equipped with a needle valve, and containing 112.8 g of isobutylene which had been dehydrated by passing the same through a column of barium oxide was then connected to the three-way cock. Subsequently, the polymerization vessel was cooled for 1 hour by immersion in a -70°C dry ice-acetone bath, while the contents were kept being stirred. After the cooling, the pressure within the polymerization vessel was reduced using the vacuum line, and the needle valve was then opened to introduced the isobutylene from the liquefied-gas thief tube into the polymerization vessel. Nitrogen was thereafter introduced through one way of the three-way cock to restore the vessel to ordinary pressure. Cooling was then continued for further 1 hour with stirring, following which the contents in the polymerization vessel were controlled to -70°C.

Subsequently, 7.1 g (37.5 mmol) of $TiCl_4$ was introduced with a syringe through the three-way cock to initiate polymerization. One hour after the initiation of polymerization, 20.8 g (150 mmol) of 1,9-decadiene was added. The reaction was allowed to proceed for further 8 hours, and the resulting reaction mixture was poured into water to deactivate the catalyst. The organic layer was washed with pure water three times and then separated from the water. The methylene chloride, n-hexane, and 1,9-decadiene were evaporated under vacuum to obtain an allyl-terminated isobutylene polymer.

The structure of compound A is as follows.

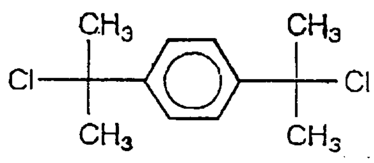

(Compound A)

PRODUCTION EXAMPLE 2

To a 1-L autoclave made of a pressure-resistant glass were attached a stirrer, a three-way cock, and a vacuum line. The polymerization vessel was dried by heating the same at 100°C for 1 hour with evacuation through the vacuum line. After cooling to room temperature, the three-way cock was operated to restore the vessel to ordinary pressure with nitrogen.

Thereafter, 204 mL of methylene chloride and 336 mL of n-hexane which both had been dried with a molecular sieve were introduced as a solvent into the autoclave with a syringe while nitrogen was kept flowing through one way of the three-way cock. Thereto was then added 10 mL of a methylene chloride solution of 5.0 mmol of DCC (compound A specified above), followed by 1.0 mmol of α-picoline as an additive.

A liquefied-gas thief tube made of a pressure-resistant glass, equipped with a needle valve, and containing 37.5 g of isobutylene which had been dehydrated by passing the same through a column of barium oxide was then connected to the three-way cock. Subsequently, the polymerization vessel was cooled for 1 hour by immersion in a -70°C dry ice-acetone bath, while the contents were kept being stirred. After the cooling, the pressure within the polymerization vessel was reduced using the vacuum line, and the needle valve was then opened to introduced the isobutylene from the liquefied-gas thief tube into the polymerization vessel. Nitrogen was thereafter introduced through one way of the three-way cock to restore the vessel to ordinary pressure. Cooling was then continued for further 1 hour with stirring, following which the contents in the polymerization vessel were controlled to -70°C.

Subsequently, 13.7 g (72.0 mmol) of $TiCl_4$ was introduced with a syringe through the three-way cock to initiate polymerization. One hour after the initiation of polymerization, 19.9 g (144 mmol) of 1,9-decadiene was added. The reaction was allowed to proceed for further 6 hours, and the resulting reaction mixture was poured into water to deactivate the catalyst. The organic layer was washed with pure water three times and then separated from the water. The methylene chloride, n-hexane, and 1,9-decadiene were evaporated under vacuum to obtain an allyl-terminated isobutylene polymer.

PRODUCTION EXAMPLE 3

To a 3-L autoclave made of a pressure-resistant glass were attached a stirrer, a three-way cock, and a vacuum line. The polymerization vessel was dried by heating the same at 100°C for 1 hour with evacuation through the vacuum line. After cooling to room temperature, the three-way cock was operated to restore the vessel to ordinary pressure with nitrogen.

Thereafter, 618 mL of methylene chloride and 1001 mL of n-hexane which both had been dried with a molecular sieve were introduced as a solvent with a syringe while nitrogen was kept flowing through one way of the three-way

cock. Thereto was then added 50 mL of a methylene chloride solution of 15 mmol of DCC (compound A specified above), followed by 6.0 mmol of $\alpha$-picoline as an additive.

A liquefied-gas thief tube made of a pressure-resistant glass, equipped with a needle valve, and containing 224 g of isobutylene which had been dehydrated by passing the same through a column of barium oxide was then connected to the three-way cock. Subsequently, the polymerization vessel was cooled for 1 hour by immersion in a -70°C dry ice-acetone bath, while the contents were kept being stirred. After the cooling, the pressure within the polymerization vessel was reduced using the vacuum line, and the needle valve was then opened to introduced the isobutylene from the liquefied-gas thief tube into the polymerization vessel. Nitrogen was thereafter introduced through one way of the three-way cock to restore the vessel to ordinary pressure. Cooling was then continued for further 1 hour with stirring, following which the contents in the polymerization vessel were controlled to -70°C.

Subsequently, 14.2 g (75 mmol) of $TiCl_4$ was introduced with a syringe through the three-way cock to initiate polymerization. One hour after the initiation of polymerization, 10.3 g (90 mmol) of allylsilane was added. The reaction was allowed to proceed for further 1 hour, and the resulting reaction mixture was poured into methanol to terminate the reaction. This mixture was stirred for a while and then allowed to stand to precipitate a polymer.

The polymer thus obtained was re-dissolved in n-hexane, and this solution was washed with pure water three times. The solvent was then evaporated to obtain an allyl-terminated isobutylene polymer.

From the amounts of the polymers obtained in Production Examples 1, 2, and 3, the yields were calculated. The Mn and Mw/Mn of each polymer were determined by GPC. Further, the terminal structure of each polymer was determined by 300 MHz $^1$H-NMR spectrometry in which the intensities of the resonance signals assigned to the protons derived from respective structures (initiator-derived proton: 6.5-7.5 ppm, polymer terminal-derived vinyl proton: 4.5-5.9 ppm) were measured and compared. The results obtained are shown in Table 1.

Table 1

| Production Example No. | GPC | | | |
|---|---|---|---|---|
| | Yield (%) | Mn | Mw/Mn | NMR Fn* |
| 1 | 96 | 18700 | 1.45 | 1.8 |
| 2 | 100 | 9100 | 1.29 | 2.0 |
| 3 | 98 | 18600 | 1.07 | 2.0 |

Fn*: number of vinyl groups per molecule

PRODUCTION EXAMPLE 4

To 300 g of a hydrogenated polyisoprene having a hydroxyl group at the both terminals (trade name, Epol; manufactured by Idemitsu Petrochemical Co., Ltd., Japan) was added 50 mL of toluene. The polyisoprene was dehydrated by azeotropic degassing. Thereto was added a solution of 48 g of t-BuOK in 200 mL of THF. Reaction was conducted at 50°C for 1 hour, and 47 mL of allyl chloride was then added dropwise over a period of about 30 minutes. After completion of the addition, the reaction mixture was allowed to react for further 1 hour at 50°C. Thereafter, 30 g of aluminum silicate was added to the reaction mixture in order to adsorb the yielded salt thereonto. This mixture was stirred at room temperature for 30 minutes, and then filtered. The filtrate was purified to obtain about 250 g of an allyl-terminated hydrogenated polyisoprene as a viscous liquid. Analysis by 300 MHz $^1$H-NMR spectrometry revealed that 92% of the terminals had an allyl group incorporated therein. The polymer obtained had a viscosity of 302 poise (23°C) as measured with an E-type viscometer.

| * Representative Properties of Epol (extracted from Technical Data on Epol of IDEMITSU PETROCHMICAL CO., LTD.) | |
|---|---|
| Hydroxyl group content (meq/g) | 0.90 |
| Viscosity (poise/30°C) | 800 |
| Average molecular weight (VPO measurement) | 2,500 |

PRODUCTION EXAMPLE 5

Into a 2-L reaction vessel made of glass and equipped with a stirrer were introduced 500 g (2.08 mol) of 1,3,5,7-tetramethylcyclotetrasiloxane, 600 g of toluene, and bis(1,3-divinyl-1,1,3,3-tetramethyldisiloxane)platinum complex cat-

alyst ($8.0 \times 10^{-7}$ mol). The contents were heated to 80°C in a nitrogen atmosphere. A mixture of 28.7 g (0.208 mol) of 1,9-decadiene and 58 g of toluene was added thereto with sufficient stirring over a period of 1 hour. After completion of the addition, stirring was continued at 80°C until the 1,9-decadiene disappeared, while the residual amount of 1,9-decadiene was determined by gas chromatography. The reaction mixture was concentrated to obtain 110 g of an Si-H group-containing hardener as a residue. Analysis by GPC revealed that this reaction product consisted mainly of compound B, which has the following structure. As a result of the analyses mentioned above, this reaction product was found to have an Si-H group content of 0.967 mol/100 g.

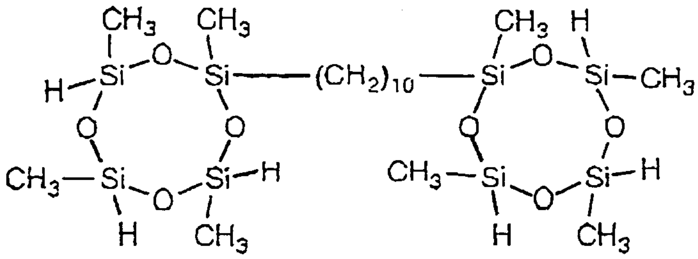

(Compound B)

EXAMPLES 1 TO 7

According to the formulations shown in Table 2, composition samples were prepared by mixing ingredients selected from the components (A) obtained in Production Examples 1 and 2, the compound B for use as component (B) which had been obtained in Production Example 5, the compound C for use as component (B), which has the following structure:

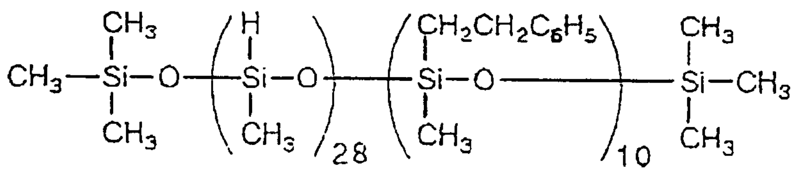

(Compound C)

a fine silica powder (manufactured by Nippon Aerosil Co., Ltd.), Softon 3200 (manufactured by Shiraishi Calcium Kaisha, Ltd.), Micro Ace L-1 (manufactured by Nippon Talc Co., Ltd.), #30 (manufactured by Mitsubishi Chemical Corporation), bis(1,3-divinyl-1,1,3,3-tetramethyldisiloxane)platinum complex catalyst ($8.3 \times 10^{-5}$ mmol/μl solution in xylene), a storage

stability improver (dimethyl maleate), and a plasticizer (paraffinic process oil).

Table 2

| Example No. | Reproduction Example | Component (A) Weight (g) | Component (B) Compound | Component (B) Weight (g) | Component (D) Kind | Component (D) Trade name | Component (D) Weight (g) | Component (E) (µL) | Component (F) Weight (g) | Antioxidant Weight (g) | Component (C) (µL) |
|---|---|---|---|---|---|---|---|---|---|---|---|
| 1 | 1 | 25 | B | 0.29 | fine silica powder | Aerosil R972 | 7.6 | 27 | 25 | 0.25 | 86 |
| 2 | 2 | 25 | B | 0.67 | - | - | - | 61 | - | 0.25 | 195 |
| 3 | 2 | 25 | B | 0.67 | fine silica powder | Aerosil R972 | 7.5 | 61 | 25 | 0.25 | 195 |
| 4 | 2 | 25 | C | 2.80 | fine silica powder | Aerosil R972 | 7.5 | 61 | 25 | 0.25 | 195 |
| 5 | 2 | 25 | B | 0.67 | heavy calcium carbonate | Softon 3200 | 50.0 | 61 | 25 | 0.25 | 195 |
| 6 | 2 | 25 | B | 0.67 | talc | Microace L-1 | 50.0 | 61 | 25 | 0.25 | 195 |
| 7 | 2 | 25 | B | 0.67 | carbon black | #30 | 1.25 | 61 | - | 0.25 | 195 |

Note) Component (D); Aerosil R972: Nippon Aerosil Co., Ltd.
Soften 3200: Shiraishi Calcium Kaisha, Ltd.
Micro Ace: Nippon Talc Co., Ltd.
#30: Mitsubishi Kagaku K.K.

Each composition was subjected to molding with an injection-molding machine (Type M-32) manufactured by Meiki Seisakusho Co., Ltd., Japan using a mold having the shape of dumbbell No. 3 according to JIS K6301. The screw speed used was 50 rpm and the temperature was regulated to from 23 to 30°C. The mold temperature was 120°C, with the

holding time of 10 minutes. Thus, dumbbell moldings were obtained, which were examined for tensile properties (in accordance with JIS K6301) and hardness. The uncured composition samples each was evaluated for flowability by measuring the viscosity thereof at a shear rate of 1,000 $sec^{-1}$ with a Koka-type flow tester. The results obtained are shown in Table 3.

Table 3

| Example No. | Viscosity (poise) | Dumbbell Tensile strength | | Hardness (Hs) |
|---|---|---|---|---|
| | | Strength at Break ($kgf/cm^2$) | Elongation at Break (%) | |
| 1 | 2800 | 58 | 900 | 44 |
| 2 | 7000 | 12 | 250 | 35 |
| 3 | 2100 | 40 | 510 | 40 |
| 4 | 2000 | 39 | 480 | 39 |
| 5 | 1900 | 16 | 300 | 23 |
| 6 | 2300 | 27 | 54 | 37 |
| 7 | 9000 | 32 | 450 | 42 |

As apparent from the Examples, the composition of the present invention can be used in molding for taking advantage of the high production efficiency attained with an injection-molding machine, and gives a rubbery molding having properties which are not possessed by moldings obtained from any of the conventional urethane or silicone rubber injection-molding materials. Specifically, this cured molding not only has exceedingly low permeability to gases and water vapor (water vapor permeability: about $1 \times 10^{-11}$ g · $cm/cm^2$ · sec · cmHg) due to the use of a saturated hydrocarbon polymer, but also has so high heat resistance that the molding never undergoes surface melting even under severe conditions of 130°C and 300 days. The molding furthermore has other various properties including weatherability, chemical resistance, vibration-deadening properties, and insulating properties. Therefore, the composition of the present invention can be used in a wide range of applications.

## Claims

**1.** A curable composition for injection molding which comprises:

(A) a saturated hydrocarbon polymer containing at least one alkenyl group capable of undergoing a hydrosilylation reaction per molecule and having a molecular weight of 100,000 or lower;
(B) a hardener having a molecular weight of 30,000 or lower and containing at least two hydrosilyl groups per molecule; and
(C) a hydrosilylation catalyst.

**2.** The curable composition for injection molding as claimed in claim 1, which further comprises (D) at least one inorganic filler selected from a fine silica powder, calcium carbonate, talc, and carbon black.

**3.** The curable composition for injection molding as claimed in claim 1 or 2, which further comprises (E) a storage stability improver.

**4.** The curable composition for injection molding as claimed in any of claims 1 to 3, which further comprises (F) a plasticizer.

**5.** The curable composition for injection molding as claimed in any of claims 1 to 4, which has a viscosity of from 200 to 20,000 poise at a shear rate of 1,000 $sec^{-1}$.

**6.** The curable composition for injection molding as claimed in any of claims 1 to 5, wherein the content of repeating units derived from isobutylene in said polymer (A) is 50% by weight or higher.

**7.** The curable composition for injection molding as claimed in any of claims 1 to 5, wherein the content of repeating units derived from isobutylene in said polymer (A) is 80% by weight or higher.

8. The curable composition for injection molding as claimed in claim 6 or 7, wherein said hardener (B) is an organohydrogenpolysiloxane containing at least two hydrosilyl groups per molecule.

9. The curable composition for injection molding as claimed in claim 6 or 7, wherein said hardener (B) is an organic hardener containing at least two organohydrogenpolysiloxane residues each containing at least one hydrosilyl group per molecule.

10. The curable composition for injection molding as claimed in claim 6 or 7, wherein said hardener (B) is a non-polymeric organic hardener containing at least two hydrosilyl groups per molecule.

European Patent Office

# EUROPEAN SEARCH REPORT

Application Number
EP 95 11 6968

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 803 244 (J. D. UMPLEBY)<br>* column 4, line 67 - column 5, line 19 *<br>* column 5, line 34 - line 56; claims 1-15 * | 1-10 | C08F8/42 |
| X | EP-A-0 431 173 (KANEGAFUCHI CHEMICAL INDUSTRY CO., LTD.)<br>* page 28, line 33 - page 30, line 14; claims 9-15 * | 1-10 | |
| D,X | & JP-A-03 095 266 | 1-10 | |
| X | EP-A-0 434 840 (KANEGAFUCHI CHEMICAL INDUSTRY CO., LTD.)<br>* page 20, line 39 - page 22, line 25; claims 13-33 * | 1-10 | |
| D,X | & JP-A-03 095 266 | 1-10 | |
| A | GB-A-2 110 706 (ANIC SPA)<br>* claims 1-13 * | 1 | |
| A | WO-A-92 07916 (MINNESOTA MINING AND MANUFACTURING COMPANY)<br>* claims 1-10 * | 1 | TECHNICAL FIELDS SEARCHED (Int.Cl.6)<br>C08F<br>C08K |
| A | EP-A-0 201 371 (SOCIETE NATIONALE DES POUDRES ET EXPLOSIFS)<br>* claims 1-14 * | 1 | |
| A | US-A-4 334 036 (KAZUYA YONEZAWA)<br>* claims 1-5 * | 1 | |
| A | EP-A-0 264 214 (DOW CORNING CORPORATION)<br>* claims 1-11 * | 1 | |
| D,A | & JP-A-63 105 005 | | |

The present search report has been drawn up for all claims

| Place of search | Date of completion of the search | Examiner |
|---|---|---|
| THE HAGUE | 6 February 1996 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)